(19)

Europäisches
Patentamt
European
Patent Office
Office européen
des brevets

(11) **EP 3 966 524 B1**

(12) **EUROPEAN PATENT SPECIFICATION**

(45) Date of publication and mention
of the grant of the patent:
**02.08.2023 Bulletin 2023/31**

(21) Application number: **20732314.8**

(22) Date of filing: **11.05.2020**

(51) International Patent Classification (IPC):
*G01C 15/00* $^{(2006.01)}$  *G06N 20/00* $^{(2019.01)}$
*G06N 5/00* $^{(2023.01)}$   *G01M 5/00* $^{(2006.01)}$
*G06N 3/02* $^{(2006.01)}$   *G06N 3/12* $^{(2023.01)}$

(52) Cooperative Patent Classification (CPC):
**G01C 15/00; G01M 5/0008; G01M 5/0041;
G06N 5/01; G06N 20/00;** G06N 3/02; G06N 3/126

(86) International application number:
**PCT/IB2020/054433**

(87) International publication number:
**WO 2020/230001 (19.11.2020 Gazette 2020/47)**

(54) **A METHOD FOR SURVEYING A STRUCTURE AND A PROCESS FOR DEFINING AN OPTIMUM
METHOD OF SURVEYING SAID STRUCTURE**

VERFAHREN ZUR VERMESSUNG EINER STRUKTUR UND VERFAHREN ZUR DEFINITION EINES
OPTIMALEN VERFAHRENS ZUM VERMESSEN DER STRUKTUR

PROCÉDÉ DE SURVEILLANCE D'UNE STRUCTURE ET PROCÉDÉ DE DÉFINITION D'UN
PROCÉDÉ OPTIMAL DE SURVEILLANCE DE LADITE STRUCTURE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.05.2019 IT 201900006735**

(43) Date of publication of application:
**16.03.2022 Bulletin 2022/11**

(73) Proprietor: **Sacertis S.r.l.
00198 Roma (IT)**

(72) Inventor: **MANCINI, Simona
10137 Torino (IT)**

(74) Representative: **Locas, Davide et al
Cantaluppi & Partners S.r.l.
Piazzetta Cappellato Pedrocchi, 18
35122 Padova (IT)**

(56) References cited:
**WO-A1-2019/001022     CN-A- 101 894 187
CN-A- 107 133 389     CN-A- 107 679 328
CN-B- 105 976 018**

- LIU W ET AL: "Optimal sensor placement for
  spatial lattice structure based on genetic
  algorithms", JOURNAL OF SOUND AND
  VIBRATION, ELSEVIER, AMSTERDAM, NL, vol.
  317, no. 1-2, 21 October 2008 (2008-10-21), pages
  175-189, XP022777418, ISSN: 0022-460X, DOI:
  10.1016/J.JSV.2008.03.026 [retrieved on
  2008-05-02]
- CAN HE ET AL: "A New Optimal Sensor
  Placement Strategy Based on Modified Modal
  Assurance Criterion and Improved Adaptive
  Genetic Algorithm for Structural Health
  Monitoring", MATHEMATICAL PROBLEMS IN
  ENGINEERING, vol. 2015, 1 January 2015
  (2015-01-01), pages 1-10, XP055565119, CH ISSN:
  1024-123X, DOI: 10.1155/2015/626342

EP 3 966 524 B1

**Description**

**Technical field**

The invention relates to a method for surveying a structure and a process for defining an optimum method of surveying the structure itself.

**Technological background**

Within the analysis of structures such as, for example, bridges, viaducts, buildings, etc., it is routine to install sensors which allow monitoring of the state of deformation and/or tension of the structure being examined or portions thereof. Normally, this operation is carried out by entrusting it to the competences of a person skilled in the art who identifies what, in his/her opinion, may be the control parameters which are most sensitive and significant for the specific structure being examined and decides arbitrarily which types of sensors to use and where to position them.

It is evident that this methodology becomes more effective with the increasing competence and knowledge of the consultant consulted. On the other hand, however, there is the risk that, if the competence of the consultant is insufficient for a correct evaluation of the structure being analyzed, the sensors used are positioned in a sub-optimal manner, thereby providing information which is incomplete and potentially ineffective.

Furthermore, these sensors could be positioned so as to take only some significant kinematic mechanisms according to some specific load scenarios which are present in the structure while making it impossible to record other phenomena which are potentially important in the evaluation of any anomalies in terms of the behaviour of the structure being examined.

It is clear that this method, when it is applied according to the indications of the consultant consulted, corresponds to a method solved by means of an explicit enumeration and for this reason may be carried out only on a limited number of variables, with the drawback of it being impossible to obtain an optimum solution (that is to say, a maximization of a specific objective function within the shortest possible times). In this sense, an evident discrimination between the method discussed present in the prior art is the one set out according to the present invention and the requirement for time and computational resources necessary in order to arrive at a maximization of the objective function.

Therefore, it is clearly evident that this method carried out according to the teachings of the prior art places the consultant in the difficult position of having to critically evaluate his/her own competences in order to attempt to establish, on the one hand, whether the monitoring project with the positioning of the sensors on the structure at predetermined positions can be effectively effective and, on the other hand, whether the method based on explicit enumeration takes into consideration and correctly analyzes at least the parameters and the potentially most critical situations in relation to the safety of the structure under investigation.

Other prior art includes CN 107 133 389 disclosing a way of sensor deployment on a structure for health monitoring thereof, which is optimized based on interval robust.

A method for placing sensor in spatial lattice structure based on genetic algorithms is also disclosed in LIU W ET AL "Optimal sensor placement for spatial lattice structure based on genetic algorithms", JOURNAL OF SOUND AND VIBRATION, ELSEVIER, AMSTERDAM, NL, Vol. 317. No 1-2, 21 October 2008, pages 175-189.

A further method for placement of sensor is disclosed in CAN HE ET AL: "A new optimal sensor placement strategy based on modified modal assurance criterion and improved adaptive genetic algorithm for structural health monitoring", MATHEMATICAL PROBLEMS IN ENGINEERING, vol. 2015, January 2015, pages 1-10.

Statement of invention

An object of the present invention is to provide a method of surveying a structure and a process which are functionally configured to at least partially overcome at least one of the disadvantages of the prior art.

Within this object, an objective is to provide a method or process which allows the structure being examined to be provided with instruments and controlled in an optimum manner, ensuring an effective monitoring thereof over time and maintaining the cost of this activity at an economically advantageous and competitive level.

Furthermore, still within this object, another objective is to develop a method and a process for surveying the structure which can be applied in an objective and reproducible manner in order to reduce the possible discretional contributions which are formulated subjectively by the consultant employed.

This object is achieved by the method and process carried out according to claims 1 and 8. Preferred features of the invention are defined in the dependent claims.

## Description of the drawings

The features and advantages of the invention will be better appreciated from the following detailed description of a number of preferred embodiments thereof which are illustrated by way of non-limiting example with reference to the appended drawings, in which:

- Figure 1 illustrates a model FEM of a structural element which is being surveyed and to which a method and a process according to the present invention are applied,
- Figure 2 illustrates the rotations calculated in each node of the FEM model, as in Figure 1, for some load scenarios applied to the structural element being surveyed of Figure 1,
- Figure 3 illustrates an example of a discretized structure comprising the structural element of Figure 1.

## Detailed description of a preferred embodiment

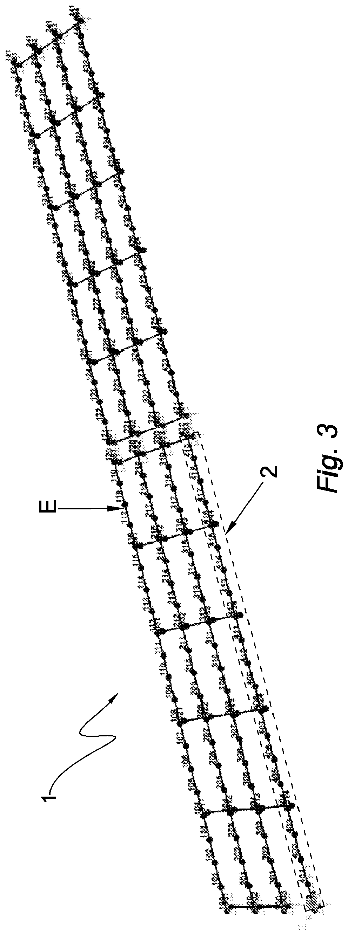

Figure 3 illustrates a structure which is being surveyed and to which the method and/or the process as described by the present invention are applied.

The developed method for surveying the structure 1 provides for

a) defining the following parameters of the structure 1,

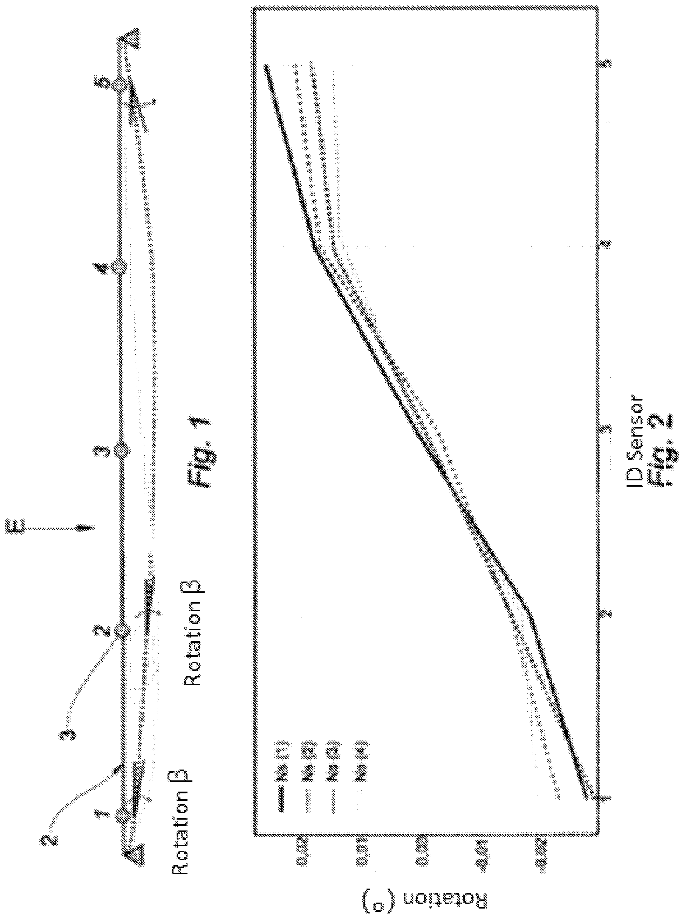

o a first plurality of elements 2 which constitute the structure 1, in which each element E of the first plurality of elements is discretized into a local plurality of corresponding nodes, bidimensional and/or tridimensional elements (see Figures 1 and 3 by way of reference),

o a minimum number of sensors $Emin_t$ for each element which have to be localized in accordance with the type of the element,

o a number of nodes M in which at least one sensor can be positioned,

o a potential i-th position $N_i$, having respective coordinates $x_i$, $y_i$, $z_i$, of the relevant corresponding node on which it is possible to position a sensor 3, the i-th index i being a integer between 1 and M,

o a potential j-th position $N_j$, having respective coordinates $x_j$, $y_j$, $z_j$, of the relevant corresponding node on which it is possible to position a sensor 3, the j-th index j being a integer between 1 and M and different from the value of the i-th index i,

o a matrix of the distances $d_{ij}$ as a function of each potential i-th position $N_i$ and of the potential j-th position $N_j$ between the possible nodes M,

o a set S of the load scenarios which are applicable to the structure being examined and a corresponding number of the load scenarios $N_s$,

o a rotation value $C_{is}$ for a potential i-th position node $N_i$ which has as a subscript the i-th index i and an s-th index s between 1 and the number of load scenarios $N_s$.

It is thereby possible to define the key parameters of the structure by imposing spatial relationships between the potential i-th positions and j-th positions $N_i$, $N_j$, the minimum number of sensors $Emin_t$ necessary for each element of the structure, the total number of nodes M present in the structure, the matrix of the distances $d_{ij}$, the set of load scenarios $N_s$ and the rotation values $C_{is}$.

By way of non-limiting example, Figure 1 illustrates an example of an element 2 (contained in a modelled single-strand structure 1 (for example, beams) FEM of an element E of the beam type) which is discretized with seven nodes (two of which are constraint nodes, five of which are the potential positions for the location of the sensors and the six "beam" type elements). Similarly, and still by way of example, Figure 3 illustrates a structure 1 comprising sixteen elements (eight longitudinal beams and eight transverse beams).

In other words, there is carried out a first step of discretizing the structure into structural elements and then, for each structural element, a second discretization into nodes which relates to the specific structural element under consideration.

Figure 2 further illustrates possible load scenarios (for example, four different load scenarios).

These illustrations serve only to assist and better understand the field of use of the present invention, taking into account that the application of the above-mentioned method or process is always preferable by means of implicit enumeration.

Preferably, the following equations and constraints apply:

$d_{i,j} = |N_j - N_i|$, $i,j \, \varepsilon \, 1 = \{1, ..., M\}$, with $i \neq j$ distance between each pair of nodes i and j

$d_{min}$, $d_{max}$ = minimum distance and maximum distance between two consecutive positions of sensors;

$$N \geq E_{min}$$

$$d_{min} \leq d_{i,j} \leq d_{max}$$

Furthermore, the above-mentioned method advantageously provides for:

b) defining for each node

o a type or class of element to which it belongs (for example, beam, cross-member, etc.),
o a specific element of the class E (for example, beam 1, beam 2),
o a value of the rotation Cis in the potential i-th position node Ni when there is applied a considered load condition relating to the load scenarios Ns,
and also for

c) preferably defining

o a predetermined number of usable sensors N,
o a first binary variable Xi which takes on the value 1 if a sensor is localized in the node corresponding to the first subscript i and 0 if the sensor is not localized, as set out in the formula (1),

$$\sum_{i \in I} Xi = N \qquad (1)$$

o a second binary variable Yij which takes on the value 1 if a sensor is localized in the node corresponding to both the first subscript i and the second subscript j and 0 if sensors have not been localized in both nodes i and j (as set out by the formulae (2) and (3)),

$$Y_{ij} \geq X_i + X_j - 1 \qquad \forall i,j \in I : i \neq j \qquad (2)$$

$$Y_{ij} \leq 0.5(X_i + X_j) \qquad \forall i,j \in I : i \neq j \qquad (3)$$

o a third variable Zi which identifies the distance dij between a node which is identified with the first subscript i and a following node which is adjacent thereto and in which a sensor is positioned (as set out in the formulae (4) and (5)),

$$Z_i \leq d_{ij}Y_{ij} + dmax(1 - Y_{ij}) \, \forall i,j \in I : i \neq j \quad (4)$$

$$Z_i \geq d_{ij}Y_{ij} - maxdist(1 - W_{ij}) \, \forall i,j \in I : i \neq j \quad (5)$$

o a fourth binary variable Wij which is used to correlate the third variable Zi with the second variable Yij, and this fourth binary variable Wij takes on a value of 1 only if the following conditions apply (the equations 4 and 5 are still being considered):

- a sensor has been positioned both in the node i and in the node j (or Yij equal to 1),
- j is the node closest to i for which Yij is equal to 1 (or the node j closest to i, between the ones in which a sensor is positioned),

o for each node i via the equation (6) set out below, it is imposed that the total at j of the fourth binary variables Wij is equal to 1, or that only one of the above-mentioned variables is equal to 1, being binary, ensuring that this happens for the node j closest to the node i, between the ones in which the sensor is positioned (as also set out by the equation (5)),

$$\sum_{\substack{j \in I \\ i \neq j}} W_{ij} = 1 \quad \forall i \in I \ (6)$$

o a sum function U which represents the total of rotations read by the usable sensors N, the result of which is a vector which represents the sequence of the values assumed by the first binary variable Xi multiplied by the rotation Cis (as shown in the following formula (10)),

$$U = \sum_{i=1}^{NI} \sum_{s=1}^{N_S} C_{is} X_i \qquad (10)$$

Preferably, at this point the surveying method and the process to which the present invention relates provide for:

d) imposing the following constraints:

o the effective number of sensors $N_{eff}$ in use is less than or equal to the predetermined number N,
o the number of sensors positioned in each element has to be greater than or equal to the minimum number of sensors defined for this type of element, $Emin_{t(e)}$, as set out in the following formula (7):

$$\sum_{\substack{i \in I \\ :elemento(i)=e}} X_i \geq Emin_{t(e)} \quad \forall e \in E \ (7)$$

o the distance dij between a sensor which is arranged in the potential i-th position Ni and another first adjacent sensor which is arranged in the potential j-th position Nj has to be between a minimum distance $d_{min}$ and a maximum distance $d_{max}$, where these limitations are imposed on the basis of the type of element to which the node belongs (as set out by the formulae (8) and (9)):

$$Z_i \geq dmin \quad \forall i \in I \qquad (8)$$

$$Z_i \leq dmax \quad \forall i \in I \qquad (9)$$

e) Using an exact algorithm of the branch and bound or genetic or neural type or combinations thereof in order to calculate a solution $S_i$ which identifies a second plurality of nodes at which to position at least one sensor and which maximizes the sum function U (as set out in the formula 10), the total of the rotations read by means of the second plurality of N nodes on all the load cases Ns considered (as set out by the formula 11):

$$U = \sum_{i=1}^{NI} \sum_{s=1}^{N_S} C_{is} X_i \qquad (10)$$

$$(11)$$

$$Maximize \ U = \sum_{i=1}^{NI} \sum_{s=1}^{N_S} C_{is} X_i$$

f) Positioning the sensors 3 on the structure 1 in accordance with the solution $S_i$ which is produced by the step e).

In greater detail, the solution $S_i$ corresponds to the maximization of the objective function U as described above in the equation (11) and set out again here.

$$Maximize \ U = \sum_{i=1}^{NI} \sum_{s=1}^{N_S} C_{is} X_i \qquad (11)$$

According to an embodiment, the constraint expressed in the equation (2) imposes the condition that, if a sensor is localized both in the node i and in the node j, then the variable Yij which represents the information that a sensor has been localized in both the nodes, it is forced to assume a value equal to 1.

The constraint expressed in the equation (3) implies that the variable Yij assumes a value 0 if sensors have not been localized in both the nodes i and j. Therefore, the combination of (2) and (3) implies that Yij is equal to 1 if and only if sensors have been localized in both the nodes i and j.

The combination of the constraints as expressed by the equations (4) and (5) allows identification of the minimum distance between the node i and the closest node (excluding itself), in which a sensor is localized.

In greater detail, the constraint (4) imposes a condition that the minimum distance Zi is less than or equal to the distance between the node i and all the other sensors while the constraint (5) implies that Zi is greater than or equal to exactly one of these distances, which logically implies that it is greater than or equal to exactly the smallest one of them, but furthermore the constraint (4) imposes the condition that Zi is less than or equal to all the distances, including the smallest one, then the combination of (4) and (5) necessarily implies that Zi is equal to the smallest one of them.

Preferably, the term maxdist is provided as input data and indicates the greatest distance between two nodes of the set I.

Advantageously, the constraint (6) in combination with the constraint (5) serves to connect the variables W to all the variables Zi.

According to an embodiment, the constraint (7) imposes the condition that for each element the number of localized sensors N is greater than or equal to the minimum number of sensors required for each predetermined element of this type. Preferably, the constraint (8) implies that the distance between two sensors is greater than dmin while the constraint (9) ensures that each sensor is not more than dmax from the sensor closest to it.

In this context, the terms "optimum method" is intended to be understood to be a method which is capable of providing the best arrangement of a limited number of sensors which can be used.

This technical solution is particularly advantageous considering that the sensors and the installation thereof have a significant cost and that, therefore, the lower the cost associated therewith, the greater is the saving for the company or the user which/who desires to carry out the instrumentation of the structure of interest.

Furthermore, even if there were a very high number of sensors, it is not completely ensured that the arrangement thereof is carried out in accordance with an optimum manner, that is to say, so as to allow better reading in rotation, which is possible with the predetermined number of sensors, so as to reconstitute with a good approximation the current deformation state. As a result of this invention, it is also possible to comply with this requirement.

According to an embodiment of the surveying method, this sensor 3 is a biaxial accelerometer and/or triaxial accelerometer (3a) and/or an inclinometer (3b). In other words, according to an embodiment of the above-mentioned method there is provision for using a device which is capable of providing readings of rotations.

According to an embodiment, the above-mentioned surveying method comprises:

g) using a structural model FEM for identifying the distribution of rotations (Cis) of the structure 1 for each load case Ns in order to calculate the solution Si, which identifies the second plurality of nodes at which to position at least the sensor 3.

It is advantageous to note that, in practice, the modelling allows a change from the physical analysis system to a mathematical model by means of discretizing the system (structural element or overall structure) into monodimensional elements (nodes), bidimensional elements (beam type elements) and/or tridimensional elements (mesh).

This discretization is intended to obtain a discrete model which is characterized by a finite number of degrees of freedom (unlike the real physical system which has an infinite number of degrees of freedom).

Once the structure has been discretized, there are suitably assigned to each element (bidimensional element or tridimensional element) the respective physical, dimensional and mechanical characteristics in order to correctly simulate the behaviour of the real system.

Finally, the system is conditioned or the constraint conditions are introduced in order to simulate the real conditions.

In this context, therefore, a constraint is understood to be any condition which limits the movement of a body.

Finally, there are preferably introduced the load scenarios (point-like forces/linear distributions of forces/pressures (that is to say, forces on surfaces) with which the solving person calculates the rotations in each node of the modelled structure.

This step is advantageously useful in order to define the distribution of rotations Cis which is used in the method carried out according to the present invention.

According to an embodiment, the method used is of the branch and bound type and is a universal method for solving problems of combinatorial optimization (with binary variables) with constraints and linear objective functions, on the basis of the concept of implicit enumeration, or which finds the optimum for a problem by considering all the solutions, which are defined as possible combinations of values taken on by the variables, without enumerating them all explicitly but using criteria of pruning the research tree which allow a priori the exclusion of some families of solutions by identifying them as being sub-optimal.

This method preferably starts with the solution involving the linear relaxation of the problem, obtained by considering variables which belong to the set [0,1] and set {0,1} or variables which can take on any value between 0 and 1.

Preferably, the surveying method provides that

- if, during an identification step for the optimum solution to the relaxed problem, all the variables take on whole values 0 or 1, then for the optimum solution to the relaxed problem is also optimum for the original problem, alternatively
- continuing with a branching step or selecting one of the variables which takes on a fractional value ($x\_f$) and two nodes are preferably generated in a research tree, by imposing
- $x\_f=0$ in the first node and
- $x\_f=1$ in the second node,
- then continuing to explore new nodes which are iteratively open until there are no other nodes to be analyzed,
- defining a node as being "closed", that is to say, preventing any child node thereof from being generated if any of the following conditions is produced:

    1) entirety of the solution,
    2) inability to be improved,
    3) inadmissibility.

Preferably, the criterion described above in point 1) is verified when the optimum solution to the relaxed problem is complete at a node.

The criterion described above in point 2) is verified when the solution to the relaxed problem in a node is worse than the best solution obtained until now in the exploration of the tree. This implies that no other child node of this node could produce an optimum solution.

Furthermore, the criterion described above in point 3) is verified when the relaxed problem in a node does not allow any permissible solution.

It is thereby possible to optimize the analysis of the nodes which comply with the conditions for being able to produce a "child" and only them.

According to an embodiment, the tolerance value preferably used to define a whole variable is $10^{-6}$.

Advantageously, a user can define a different tolerance value which is defined according to specific requirements.

According to an embodiment which is included in this invention, there is described a process for defining an optimum method of surveying a structure 1, preferably bridges, viaducts or buildings, comprising

- defining by means of a structural model FEM a distribution of rotations Cis of the structure 1,
- using the distribution of rotations Cis for the whole of the surveying method discussed above in order to calculate the solution $S_i$ which identifies the second plurality of N nodes, given a number N of usable sensors, at which to position at least one sensor and which advantageously maximizes the total of the rotations read by means of the second plurality of N nodes on all the considered load cases Ns.

According to an embodiment, the sensors 3 are positioned on the structure 1 according to the solution $S_i$ which is produced by the step e) of the above-mentioned method.

Furthermore, the method is preferably carried out by surveying the structure 1 under investigation by measuring the conditions of potential anomaly in which the rotations differ from the standard trend which is recorded during the surveying period and exceed one or more predetermined threshold values.

Preferably, the surveying step is carried out in a continuous manner, thereby allowing an ability to measure any potentially anomalous variation of the structure 1 under investigation and an ability to intervene in good time.

It is thereby capable of monitoring the structure being examined and intervening effectively if potentially anomalous conditions were to be found.

**Claims**

1. A method for surveying a structure (1) comprising:

    a) defining the following parameters of the structure (1),

        o a first plurality of elements (2) which constitute the structure (1), in which each element E of the first plurality of elements is discretized into a local plurality of corresponding nodes, bidimensional and/or tridimensional elements,

o a minimum number of sensors $Emin_t$ for each element E which have to be localized in accordance with the type of the element,

o a total number of possible nodes M present in the structure in which at least one sensor can be positioned,

o a potential i-th position Ni, having respective coordinates, of the relevant corresponding node on which it is possible to position a sensor (3), the i-th index i being a integer between 1 and M,

o a potential j-th position Nj, having respective coordinates, of the relevant corresponding node on which it is possible to position a sensor (3), the j-th index j being a further integer between 1 and M and different from the value of the i-th index i,

o a matrix of the distances dij as a function of each potential i-th position (Ni) and of the potential j-th position Nj between the possible nodes M,

o a set S of load scenarios which are applicable to the structure being examined and a corresponding number of load scenarios Ns,

o a rotation value Cis for a potential i-th position node Ni which has as a subscript the i-th index i and an s-th index s between 1 and the number of load scenarios Ns,

b) defining for each node

o a type or class of element to which it belongs,

o a specific element of the class E,

o a value of the rotation Cis in the potential i-th position node Ni when there is applied a considered load condition relating to the load scenarios Ns,

c) defining

o a predetermined number of usable sensors N,

o a first binary variable Xi which takes on the value 1 if a sensor is localized in the node corresponding to the i-th index i and 0 if the sensor is not localized, wherein said first binary variable Xi fulfils the constrain(s) according to the following formula:

$$\sum_{i \in I} Xi = N$$

wherein I is a set of nodes;

o a second binary variable Yij which takes on the value 1 if a sensor is localized in the node corresponding to both the first subscript of the i-th index i and the second subscript the j-th index j and 0 if sensors have not been localized in both nodes having the i-th index i and the j-th index j, as set out by the following formulae:

$$Y_{ij} \geq X_i + X_j - 1 \qquad \forall i,j \in I : i \neq j$$

$$Y_{ij} \leq 0.5(X_i + X_j) \qquad \forall i,j \in I : i \neq j$$

o a third variable Zi which identifies the distance dij between a node which is identified with the first subscript having the i-th index and a following node which is adjacent thereto and in which a sensor is positioned, as set out in the following formulae that are named in the following equations 4 and 5:

$$Z_i \leq d_{ij}Y_{ij} + dmax(1 - Y_{ij}) \, \forall i,j \in I : i \neq j$$

$$Z_i \geq d_{ij}Y_{ij} - maxdist(1 - W_{ij}) \, \forall i,j \in I : i \neq j$$

wherein maxdist(1-Wij) is provided as input data and indicates the greatest distance between two nodes of the set of nodes I

o a fourth binary variable Wij which is used to correlate the third variable Zi with the second variable Yij, and this fourth binary variable Wij taking on a value of 1 only if the following conditions apply, the equations 4 and 5 are still being considered:

- a sensor has been positioned both in the node having the i-th index i and in the node having the j-th index j or the second variable Yij is equal to 1,
- j-th index j is the node closest to the i-th index i for which the second variable Yij is equal to 1 or the node having the j-th index j closest to the i-th index i, between which a sensor is positioned,

o for each node having the i-th index i via the equation (6) set out below, it is imposed that the total at the j-th index j of the fourth binary variables Wij is equal to 1, meaning that only one of the above-mentioned variables is equal to 1, being binary, ensuring that this happens for the node having the j-th index j closest to the node having the i-th index i, between the ones in which the sensor is positioned, as also set out by the following equation,

$$\sum_{\substack{j \in I \\ j \neq i}} W_{ij} = 1 \quad \forall i \in I$$

o a sum function (U) which represents the total of rotations read by the usable sensors (N), the result of which is a vector which represents the sequence of the values assumed by the first binary variable (Xi) multiplied by the rotation (Cis), as shown in the following formula,

$$U = \sum_{i=1}^{Ni} \sum_{s=1}^{N_s} C_{is} X_i$$

d) imposing the following constraints:

o the effective number of sensors $N_{eff}$ in use is less than or equal to the predetermined number N,
o the number of sensors positioned in each element has to be greater than or equal to the minimum number of sensors defined for this type of element, $Emin_{t(e)}$, as set out in the following formula:

$$\sum_{\substack{i \in I \\ :elemento(i)=e}} X_i \geq Emin_{t(e)} \quad \forall e \in E$$

o the distance dij between a sensor which is arranged in the potential i-th position Ni and another first adjacent sensor which is arranged in the potential j-th position Nj has to be between a minimum distance $d_{min}$ and a maximum distance $d_{max}$, where these limitations are imposed on the basis of the type of element to which the node belongs, as set out by the formulae:

$$Z_i \geq dmin \quad \forall i \in I$$

$$Z_i \leq dmax \quad \forall i \in I$$

e) using an exact algorithm of the branch and bound or genetic or neural type or combinations thereof in order to calculate a solution (Si)

o which identifies a second plurality of nodes at which to position at least one sensor,
o which identifies a production of the set of first binary variables Xi to which the maximum value of the sum function U corresponds, as set out in the following formula (10), that is to say, maximizing the sum function U as set out in the following formulae:

$$U = \sum_{i=1}^{Ni} \sum_{s=1}^{N_s} C_{is} X_i$$

$$Maximize\ U = \sum_{i=1}^{Ni} \sum_{s=1}^{N_s} C_{is} X_i$$

f) positioning the sensors (3) on the structure (1) in accordance with the solution $S_i$ which is produced by the step e) .

2. A method according to the preceding claim, wherein

   - the sensor (3) positioned on the structure (1) is a biaxial accelerometer and/or triaxial accelerometer and/or an inclinometer.

3. A method according to claim 1, comprising:
   g) using a structural model FEM for identifying the distribution of rotations Cis of the structure (1) for each load case Ns in order to calculate the solution Si, which identifies the second plurality of nodes at which to position at least the sensor (3).

4. A method according to any one of the preceding claims, wherein the algorithm used is of the branch and bound type and is a method for solving problems of combinatorial optimization with binary variables with constraints and linear objective functions on the basis of the concept of implicit enumeration.

5. A method according to the preceding claim, wherein the exact branch and bound algorithm starts with a solution involving the linear relaxation of a problem, obtained by considering variables which can take on any value between 0 and 1.

6. A method according to the preceding claim, wherein

   - if, during an identification step for the optimum solution to the relaxed problem, all the variables take on whole values 0 or 1, then the optimum solution to the relaxed problem is also optimum for the original problem, alternatively
   - continuing with a branching step, that is to say selecting one of the variables which takes on a fractional value x_f and two nodes are preferably generated in a research tree, by imposing
   - x_f=0 in the first node and
   - x_f=1 in the second node,
   - then continuing to explore new nodes which are iteratively open until there are no other nodes to be analyzed,
   - defining a node as being "closed", that is to say, preventing any child node thereof from being generated if any of the following conditions is produced:

     1) entirety of the solution,
     2) inability to be improved,
     3) inadmissibility.

7. A method according to the preceding claim, wherein the tolerance value preferably used to define a whole variable is $10^{-6}$.

8. A process for defining an optimum method of surveying a structure (1), preferably bridges, viaducts or buildings, comprising

   - calculating by means of a structural model FEM a distribution of rotations Cis of the nodes in which the structure (1) is discretized, some or all of the nodes of the structural model FEM may be potential candidates for the positioning of a sensor,
   - using the distribution of rotations Cis for the whole of a method according to claim 1 or dependent claims in order to calculate a solution $S_i$ which identifies a plurality of a defined number of nodes N at which to position at least one sensor and which maximizes the total of the rotations read by means of the plurality of N nodes on all the considered load cases Ns, and positioning the sensors (3) on the structure (1) according to the solution $S_i$ which is produced by the step e) of the method according to the preceding claims,
   - surveying the structure (1) under investigation by measuring the conditions of potential anomaly in which the rotations differ from the standard trend which is recorded during the surveying period and exceed one or more predetermined threshold values.

9. A process according to claim 8, wherein the surveying step is carried out in a continuous manner over time.

**Patentansprüche**

1. Verfahren zum Vermessen einer Struktur (1), umfassend:

a) Definieren der folgenden Parameter der Struktur (1),

o einer ersten Vielzahl von Elementen (2), welche die Struktur (1) bilden, in der jedes Element E der ersten Vielzahl von Elementen in eine lokale Vielzahl entsprechender Knoten, zweidimensionaler und/oder dreidimensionaler Elemente diskretisiert ist,
o einer Mindestanzahl von Sensoren Emint für jedes Element E, die gemäß dem Typ des Elements lokalisiert werden müssen,
o einer Gesamtzahl der in der Struktur vorhandenen möglichen Knoten M, in denen zumindest ein Sensor positioniert werden kann,
o einer möglichen i-te Position Ni mit entsprechenden Koordinaten des jeweiligen entsprechenden Knotens, an dem ein Sensor (3) positionierbar ist, wobei der i-te Index i eine ganze Zahl zwischen 1 und M ist,
o einer möglichen j-te Position Nj mit entsprechenden Koordinaten des jeweiligen entsprechenden Knotens, an dem ein Sensor (3) positionierbar ist, wobei der j-te Index j eine ganze Zahl zwischen 1 und M ist uns sich vom Wert des i-ten Indexes unterscheidet,
o einer Matrix der Abstände dij als Funktion jeder möglichen i-ten Position (Ni) und der möglichen j-ten Position Nj zwischen den möglichen Knoten M,
o einer Reihe S von Lastszenarien, die auf die untersuchte Struktur anwendbar sind, und eine entsprechende Anzahl von Lastszenarien Ns,
o eines Rotationswerts Cis für einen möglichen i-ten Positionsknoten Ni, der als Subskipt den i-ten Index i und einen s-ten Index s zwischen 1 und der Anzahl von Lastszenarien Ns aufweist,

b) Definieren für jeden Knoten

o eines Typs oder einer Klasse eines Elements, zu denen dieser gehört,
o eines spezifischen Elements der Klasse E,
o eines Werts der Rotation Cis im möglichen i-ten Positionsknoten Ni, wenn ein betrachteter Lastzustand in Bezug auf die Lastszenarien Ns angewendet wird,

c) definieren

o einer vorgegebenen Anzahl nutzbarer Sensoren N,
o einer ersten binären Variablen Xi, die den Wert 1, wenn ein Sensor in dem Knoten lokalisiert ist, der dem i-ten Index i entspricht, und 0 annimmt, wenn der Sensor nicht lokalisiert ist, wobei die erste binäre Variable Xi die Randbedingung(en) gemäß der folgenden Formel erfüllt:

$$\sum_{i \in I} Xi = N$$

wobei I ein Satz von Knoten ist;
o einer zweiten binären Variablen Yij, die den Wert 1, wenn ein Sensor in dem Knoten lokalisiert ist, der sowohl dem ersten Subskipt des i-ten Index i als auch dem zweiten Subskipt des j-ten Index j entspricht, und den Wert 0 annimmt, wenn die Sensoren nicht in den beiden Knoten mit dem i-ten Index i und dem j-ten Index j lokalisiert wurden, wie dies durch die folgenden Formeln dargelegt ist,:

$$Y_{ij} \geq X_i + X_j - 1 \qquad\qquad \forall i, j \in I: i \neq j$$

$$Y_{ij} \leq 0{,}5(Xi + Xj) \qquad\qquad \forall i, j \in I: i \neq j$$

• einer dritten Variablen Zi, die den Abstand dij zwischen einem Knoten, der mit dem ersten Subskipt mit dem i-ten Index identifiziert wird, und einem folgenden Knoten, der daran angrenzt und in dem ein Sensor positioniert ist, identifiziert, wie dies in den folgenden Formeln dargelegt ist, die in den folgenden Gleichungen 4 und 5 benannt sind: •

$$Z_i \leq d_{ij}Y_{ij} + Dmax(1 - Y_{ij}) \; \forall i,j \in I : i \neq j \quad (4)$$

$$Z_i \geq d_{ij}Y_{ij} - maxdist(1 - W_{ij}) \; \forall i,j \in I : i \neq j$$

wobei maxdist(1-Wij) als Eingangsdaten bereitgestellt wird und den größten Abstand zwischen zwei Knoten des Satzes von Knoten I kennzeichnet,

o einer vierten binären Variablen Wij, die zur Korrelation der dritten Variablen Zi mit der zweiten Variablen Yij dient, und diese vierte binäre Variable Wij nur dann den Wert 1 annimmt, wenn die folgenden Bedingungen zutreffen, wobei die Gleichungen 4 und 5 weiterhin berücksichtigt werden:

▪ ein Sensor wurde sowohl in dem Knoten mit dem i-ten Index i als auch in dem Knoten mit dem j-ten Index j positioniert, oder die zweite Variable Yij ist gleich 1,
▪ der j-te Index j ist der dem i-ten Index i am nächsten liegende Knoten, für den die zweite Variable Yij gleich 1 ist, oder der dem i-ten Index i am nächsten liegende Knoten mit dem j-ten Index j, zwischen dem ein Sensor positioniert ist,

o für jeden Knoten mit dem i-ten Index i wird über die nachstehend dargelegte Gleichung (6) festgelegt, dass die Summe der vierten binären Variablen Wij am j-ten Index j gleich 1 ist, was bedeutet, dass nur eine der oben genannten Variablen gleich 1 ist, da diese binär sind, wobei sichergestellt wird, dass dies für den Knoten mit dem j-ten Index j geschieht, der dem Knoten mit dem i-ten Index i zwischen denjenigen, in denen der Sensor positioniert ist, am nächsten liegt, wie dies auch durch die folgende Gleichung dargelegt ist,

$$\sum_{\substack{j \in I \\ :i \neq j}} W_{ij} = 1 \quad \forall i \in I$$

o eine Summenfunktion (U), welche die Summe der von den verwendbaren Sensoren (N) erfassten Rotationen darstellt, deren Ergebnis ein Vektor ist, der die Folge der von der ersten binären Variablen (Xi) angenommenen Werte multipliziert mit der Rotation (Cis), wie in der folgenden Formel gezeigt, repräsentiert

$$U = \sum_{i=1}^{Ni} \sum_{s=1}^{Ns} C_{is} X_i$$

d) Festlegen der folgenden Randbedingungen:

o die effektive Anzahl der verwendeten Sensoren $N_{eff}$ ist kleiner oder gleich der vorgegebenen Anzahl N,
o die Anzahl der in jedem Element positionierten Sensoren muss größer oder gleich der für diesen Elementtyp definierten Mindestanzahl von Sensoren, $Emin_{t(e)}$, sein, wie dies in der folgenden Formel dargelegt ist:

$$\sum_{\substack{i \in I \\ :elemento(i)=e}} X_i \geq Emin_{t(e)} \quad \forall e \in E$$

der Abstand dij zwischen einem Sensor, der in der möglichen i-ten Position Ni angeordnet ist, und einem weiteren ersten angrenzenden Sensor, der in der möglichen j-ten Position Nj angeordnet ist, muss zwischen einem Mindestabstand dmin und einem Maximalabstand dmax liegen, wobei diese Beschränkungen basierend auf dem Elementtyp, zu dem der Knoten gehört, wie durch die folgende Formel dargelegt, festgelegt

werden:

$$Z_i \geq dmin \qquad \forall i \in I$$

$$Z_i \leq dmax \qquad \forall i \in I$$

e) Verwenden eines exakten Algorithmus vom Typ Verzweigung und Begrenzung (Branch and Bound) oder eines genetischen oder neuronalen Typs oder Kombinationen davon, um eine Lösung (Si) zu berechnen

o die eine zweite Vielzahl von Knoten identifiziert, an denen zumindest ein Sensor zu positionieren ist,
o die eine Herstellung des Satzes von ersten binären Variablen Xi, denen der Maximalwert der Summenfunktion U, wie in der folgenden Formel (10) dargelegt, entspricht, d.h. das Maximieren der Summenfunktion U, gemäß den folgenden Formeln identifiziert:

$$U = \sum_{i=1}^{N_i} \sum_{s=1}^{N_s} C_{is} X_i$$

$$Maximize \; U = \sum_{i=1}^{N_i} \sum_{s=1}^{N_s} C_{is} X_i$$

f) Positionieren der Sensoren (3) an der Struktur (1) gemäß der Lösung Si, die durch den Schritt e) hergestellt wird.

2. Verfahren nach dem vorhergehenden Anspruch, wobei

- der an der Struktur (1) angeordnete Sensor (3) ein biaxialer Beschleunigungsmesser und/oder triaxialer Beschleunigungsmesser und/oder ein Neigungssensor ist.

3. Verfahren nach Anspruch 1, umfassend:
g) Verwenden eines Strukturmodells FEM zur Identifizierung der Verteilung der Rotationen Cis der Struktur (1) für jeden Lastfall Ns, um die Lösung Si zu berechnen, welche die zweite Vielzahl von Knoten identifiziert, an denen zumindest der Sensor (3) zu positionieren ist.

4. Verfahren nach einem der vorhergehenden Ansprüche, wobei der verwendete Algorithmus vom Typ Branch-and-Bound ist und ein Verfahren zum Lösen von Problemen der kombinatorischen Optimierung mit binären Variablen mit Randbedingungen und linearen Zielfunktionen basierend auf dem Konzept der impliziten Aufzählung ist.

5. Verfahren nach dem vorhergehenden Anspruch, wobei der exakte Branch-and-Bound-Algorithmus mit einer Lösung beginnt, welche die lineare Relaxation eines Problems beinhaltet, das durch Berücksichtigung von Variablen erhalten wird, die jeden Wert zwischen 0 und 1 annehmen können.

6. Verfahren nach dem vorhergehenden Anspruch, wobei

- wenn während eines Identifikationsschritts für die optimale Lösung des entspannten Problems alle Variablen ganze Werte 0 oder 1 annehmen, dann ist die optimale Lösung des entspannten Problems alternativ auch optimal für das ursprüngliche Problem,
- Fortfahren mit einem Verzweigungsschritt, d. h. Auswählen einer der Variablen, die einen gebrochenen Wert x_f annimmt, und vorzugsweise zwei Knoten in einem Untersuchungsbaum dadurch generiert, dass folgendes festgelegt wird:

- x_f=0 im ersten Knoten und
- x_f=1 im zweiten Knoten,
- anschließend Fortfahren mit der Untersuchung neuer Knoten, die iterativ geöffnet sind, bis es keine weiteren zu analysierende Knoten mehr gibt,
- Definieren eines Knotens als "geschlossen", d. h. Verhindern, dass Unterknoten erzeugt werden, wenn

EP 3 966 524 B1

eine der folgenden Bedingungen vorliegt:

1) Gesamtheit der Lösung,
2) Unfähigkeit zur Verbesserung,
3) Unzulässigkeit.

**7.** Verfahren nach dem vorhergehenden Anspruch, wobei der Toleranzwert, der vorzugsweise zum Definieren einer ganzen Variablen verwendet wird, $10^{-6}$ beträgt.

**8.** Verfahren zum Definieren eines optimalen Verfahrens zum Vermessen einer Struktur (1), vorzugsweise von Brücken, Viadukten oder Gebäuden, umfassend:

- Berechnen einer Verteilung der Rotationen Cis der Knoten, in denen die Struktur (1) diskretisiert ist, mit Hilfe eines Strukturmodells FEM, wobei einige oder alle Knoten des Strukturmodells FEM potenzielle Kandidaten für die Positionierung eines Sensors sein können,
- Verwenden der Verteilung von Rotationen Cis für das gesamte Verfahren nach Anspruch 1 oder abhängigen Ansprüchen, um eine Lösung Si zu berechnen, die eine Vielzahl einer definierten Anzahl von Knoten N identifiziert, an denen zumindest ein Sensor zu positionieren ist, und welche die Summe der Rotationen maximiert, die mittels der Vielzahl von N Knoten an allen betrachteten Lastfällen Ns erfasst werden, und Positionieren der Sensoren (3) an der Struktur (1) gemäß der Lösung Si, die durch den Schritt e) des Verfahrens gemäß den vorhergehenden Ansprüchen hergestellt wird,
- Vermessen der zu untersuchenden Struktur (1) durch Messen der Bedingungen einer möglichen Anomalie, bei der die Rotationen von dem während des Vermessungszeitraums aufgezeichneten Standardtrend abweichen und einen oder mehrere vorbestimmte Schwellenwerte überschreiten.

**9.** Verfahren nach Anspruch 8, wobei der Vermessungsschritt kontinuierlich über die Zeit durchgeführt wird.


**Revendications**

**1.** Procédé d'arpentage d'une structure (1), comprenant:

a) définir les paramètres suivants de la structure (1) :

o une première pluralité d'éléments (2) qui constituent la structure (1), dans lequel chaque élément E de la première pluralité d'éléments est discrétisé en une pluralité locale de noeuds correspondants et d'éléments bidimensionnels et/ou tridimensionnels ;
o un nombre minimum de capteurs, Emint, pour chaque élément E, qui doivent être localisés conformément au type de l'élément ;
o un nombre total de noeuds possibles M, présents dans la structure, dans lesquels au moins un capteur peut être positionné ;
o une i-ième position potentielle Ni, présentant des coordonnées respectives, du noeud correspondant pertinent sur lequel il est possible de positionner un capteur (3), l'i-ième indice i étant un nombre entier compris entre 1 et M ;
o une j-ième position potentielle Nj, présentant des coordonnées respectives du noeud correspondant pertinent sur lequel il est possible de positionner un capteur (3), le j-ième indice j étant un nombre entier supplémentaire compris entre 1 et M et différent de la valeur de l'i-ième indice i ;
o une matrice des distances dij, en fonction de chaque i-ième position potentielle (Ni) et de la j-ième position potentielle Nj, entre les noeuds possibles M ;
o un ensemble S de scénarios de charge applicables à la structure examinée et un nombre correspondant de scénarios de charge Ns ;
o une valeur de rotation Cis, pour un noeud d'i-ième position potentielle, Ni, qui présente en tant qu'indice inférieur l'i-ième indice « i » et un s-ième indice « s » compris entre « 1 » et le nombre de scénarios de charge Ns ;

b) définir, pour chaque noeud :

o un type ou une classe d'élément auquel il appartient ;

14

o un élément spécifique de la classe E ;

o une valeur de la rotation Cis dans le noeud d'i-ième position potentielle Ni lorsqu'est appliquée une condition de charge considérée connexe aux scénarios de charge Ns ;

c) définir :

o un nombre prédéterminé de capteurs utilisables N ;

o une première variable binaire Xi qui prend la valeur 1 si un capteur est localisé dans le noeud correspondant à l'i-ième indice i, et 0 si le capteur n'est pas localisé, dans laquelle ladite première variable binaire Xi satisfait la ou les contraintes selon la formule suivante :

$$\sum_{i \in I} Xi = N$$

dans lequel 1 est un ensemble de noeuds ;

o une deuxième variable binaire Yij, qui prend la valeur 1 si un capteur est localisé dans le noeud correspondant à la fois au premier indice inférieur de l'i-ième indice i et au second indice inférieur du j-ième indice j, et 0 si des capteurs n'ont pas été localisés dans les deux noeuds présentant l'i-ième indice i et le j-ième indice j, tel que présenté dans les formules suivantes :

$$Y_{ij} \geq X_i + X_j - 1 \qquad \forall i,j \in I : i \neq j$$

$$Y_{ij} \leq 0.5(X_i + X_j) \qquad \forall i,j \in I : i \neq j$$

o une troisième variable Zi, qui identifie la distance dij entre un noeud identifié par le premier indice inférieur présentant l'i-ième indice et un noeud suivant qui lui est adjacent, et dans lequel un capteur est positionné, tel que présenté dans les formules suivantes qui sont nommées dans les équations 4 et 5 ci-dessous :

$$Z_i \leq d_{ij}Y_{ij} + dmax(1 - Y_{ij}) \ \forall i,j \in I : i \neq j$$

$$Z_i \geq d_{ij}Y_{ij} - maxdist(1 - W_{ij}) \ \forall i,j \in I : i \neq j$$

dans lequel maxdist(1-$W_{ij}$) est fourni en tant que données d'entrée et indique la plus grande distance entre deux noeuds de l'ensemble de noeuds I ;

o une quatrième variable binaire Wij, qui est utilisée pour corréler la troisième variable Zi avec la deuxième variable Yij, et cette quatrième variable binaire Wij ne prenant la valeur 1 que si les conditions ci-dessous s'appliquent, dans lesquelles les équations 4 et 5 sont toujours considérées :

■ un capteur a été positionné à la fois dans le noeud présentant l'i-ième indice i et dans le noeud présentant le j-ième indice j, ou la deuxième variable Yij est égale à 1 ;

■ le j-ième indice j est le noeud le plus proche du i-ième indice i pour lequel la deuxième variable Yij est égale à 1, ou le noeud présentant le j-ième indice j le plus proche du i-ième indice i, entre lesquels un capteur est positionné ;

o pour chaque noeud présentant l'i-ième indice i par le biais de l'équation (6) présentée ci-dessous, il est imposé que le total au niveau du j-ième indice j des quatrièmes variables binaires Wij soit égal à 1, ce qui signifie qu'une seule des variables susmentionnées est égale à 1, en ce qu'elles sont binaires, garantissant que cela se produit pour le noeud présentant le j-ième indice j le plus proche du noeud présentant l'i-ième indice i, entre ceux dans lesquels le capteur est positionné, tel que présenté également dans l'équation ci-dessous ;

o

$$\sum_{\substack{j \in I \\ i \neq i}} W_{ij} = 1 \qquad \forall i \in I$$

o une fonction de somme (U) qui représente le total des rotations lues par les capteurs utilisables (N), dont le résultat est un vecteur qui représente la séquence des valeurs prises par la première variable binaire (Xi) multipliée par la rotation (Cis), tel que présenté dans la formule ci-dessous,

o

$$U = \sum_{i=1}^{N_i} \sum_{s=1}^{N_s} C_{is} X_i$$

d) imposer les contraintes ci-dessous :

o le nombre effectif de capteurs $N_{eff}$ en cours d'utilisation est inférieur ou égal au nombre prédéterminé N ;

o le nombre de capteurs positionnés dans chaque élément doit être supérieur ou égal au nombre minimum de capteurs définis pour ce type d'élément, $Emin_{t(e)}$, tel que présenté dans la formule ci-dessous :

o

$$\sum_{\substack{i \in I \\ :elemento(i)=e}} X_i \geq Emin_{t(e)} \quad \forall e \in E$$

o la distance dij entre un capteur qui est agencé dans l'i-ième position potentielle Ni et un autre premier capteur adjacent qui est agencé dans la j-ième position potentielle Nj doit être comprise entre une distance minimale, $d_{min}$, et une distance maximale, $d_{max}$, où ces limites sont imposées sur la base du type d'élément auquel le noeud appartient, tel que présenté dans les formules ci-dessous :

$$Z_i \geq dmin \quad \forall i \in I$$

$$Z_i \leq dmax \quad \forall i \in I$$

e) utiliser un algorithme exact du type graphes binaires, ou génétique, ou neuronal, ou des combinaisons de ceux-ci, afin de calculer une solution ($S_i$) :

o qui identifie une seconde pluralité de noeuds sur lesquels positionner au moins un capteur ;

o qui identifie une production de l'ensemble de premières variables binaires Xi auxquelles correspond la valeur maximale de la fonction de somme U, tel que présenté dans la formule ci-dessous (10), c'est-à-dire maximisant la fonction de somme U tel que présenté dans les formules ci-dessous

$$U = \sum_{i=1}^{N_i} \sum_{s=1}^{N_s} C_{is} X_i$$

o

$$Maximize\ U = \sum_{i=1}^{N_i} \sum_{s=1}^{N_s} C_{is} X_i$$

f) positionner les capteurs (3) sur la structure (1) conformément à la solution Si qui est produite à l'étape e).

**2.** Procédé selon la revendication 1, dans lequel :

- le capteur (3) positionné sur la structure (1) est un accéléromètre biaxial et/ou un accéléromètre triaxial et/ou un inclinomètre.

**3.** Procédé selon la revendication 1, comprenant l'étape ci-dessous consistant à :

g) utiliser un modèle FEM structurel pour identifier la distribution de rotations Cis de la structure (1) pour chaque cas de charge Ns afin de calculer la solution Si, qui identifie la seconde pluralité de noeuds sur lesquels positionner au moins le capteur (3).

**4.** Procédé selon l'une quelconque des revendications précédentes, dans lequel l'algorithme utilisé est du type « graphes binaires » et il correspond à un procédé de résolution de problèmes d'optimisation combinatoire à variables binaires avec contraintes et fonctions objectifs linéaires sur la base du concept d'énumération implicite.

**5.** Procédé selon la revendication précédente, dans lequel l'algorithme exact du type graphes binaires part d'une solution impliquant la relaxation linéaire d'un problème, obtenue en considérant des variables pouvant prendre toute valeur comprise entre 0 et 1.

**6.** Procédé selon la revendication précédente, dans lequel :

- si, au cours d'une étape d'identification de la solution optimale au problème relaxé, toutes les variables prennent des valeurs entières 0 ou 1, alors la solution optimale au problème relaxé est également optimale pour le problème initial, alternativement, dans lequel le procédé comprend les étapes ci-dessous consistant à :

- poursuivre par une étape de branchement, c'est-à-dire sélectionner l'une des variables qui prend une valeur fractionnaire $x\_f$ et dans laquelle deux noeuds sont de préférence générés dans un arbre de recherche, en imposant
- $x\_f=0$ dans le premier noeud et
- $x\_f=1$ dans le second noeud ;
- et continuer ensuite à explorer de nouveaux noeuds qui sont ouverts itérativement jusqu'à ce qu'il n'y ait plus d'autres noeuds à analyser ;
- définir un noeud comme étant « fermé », c'est-à-dire empêcher la génération de tout noeud enfant de celui-ci si l'une des conditions ci-dessous est produite :

1) intégralité de la solution ;
2) impossibilité d'amélioration ; et
3) inadmissibilité.

**7.** Procédé selon la revendication précédente, dans lequel la valeur de tolérance de préférence utilisée pour définir une variable entière est $10^{-6}$.

**8.** Procédé pour définir un procédé optimal d'arpentage d'une structure (1), de préférence des ponts, des viaducs ou des bâtiments, comprenant les étapes ci-dessous consistant à :

- calculer, au moyen d'un modèle FEM structurel, une distribution de rotations Cis des noeuds dans lesquels la structure (1) est discrétisée, dans lesquels certains ou tous les noeuds du modèle FEM structurel peuvent être des candidats potentiels pour le positionnement d'un capteur ;
- utiliser la distribution de rotations Cis pour l'ensemble d'un procédé selon la revendication 1 ou selon les revendications dépendantes, afin de calculer une solution Si qui identifie une pluralité d'un nombre défini de noeuds N au niveau desquels positionner au moins un capteur, et qui maximise le total des rotations lues au moyen de la pluralité de N noeuds sur l'ensemble des cas de charge Ns considérés, et positionner les capteurs (3) sur la structure (1) selon la solution Si qui est produite par l'étape e) du procédé selon les revendications précédentes ;
- arpenter la structure (1) à l'étude, en mesurant les conditions d'anomalie potentielle dans lesquelles les rotations diffèrent de la tendance standard, qui est enregistrée pendant la période d'arpentage, et dépassent une ou plusieurs valeurs de seuil prédéterminées.

**9.** Procédé selon la revendication 8, dans lequel l'étape d'arpentage est mise en oeuvre de manière continue au fil du temps.

Rotation β

Rotation β

*Fig. 1*

ID Sensor

*Fig. 2*

Rotation (°)

*Fig. 3*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 107133389

**Non-patent literature cited in the description**

- Optimal sensor placement for spatial lattice structure based on genetic algorithms. **LIU W et al.** JOURNAL OF SOUND AND VIBRATION. ELSEVIER, 21 October 2008, vol. 317, 175-189

- **CAN HE et al.** A new optimal sensor placement strategy based on modified modal assurance criterion and improved adaptive genetic algorithm for structural health monitoring. *MATHEMATICAL PROBLEMS IN ENGINEERING,* January 2015, vol. 2015, 1-10